# FASCICULE DE BREVET EUROPEEN

(11) **EP 0 630 459 B1**
(45) Date de publication et mention de la délivrance du brevet: **03.12.1997**
(21) Numéro de dépôt: 93918747.2
(22) Date de dépôt: 08.01.1993
(51) Int. Cl.: F16L 59/02

(54) **CAPITONNAGE ISOLANT MODULAIRE POUR ENCEINTE FERMEE ET SON PROCEDE DE CONDITIONNEMENT ET DE MONTAGE**
AUS MODULEN ZUSAMMENGESETZTE ISOLIERENDE POLSTERUNG FÜR EINEN GESCHLOSSENEN BEHÄLTER, HERSTELLUNGS- UND MONTAGEVERFAHREN
MODULAR INSULATING UPHOLSTERY FOR CLOSED CHAMBERS, SHAPING AND MOUNTING PROCESSES

(30) Priorité: 09.03.1992 FR 9203070
(43) Date de publication de la demande: 28.12.1994
(73) Titulaire: ENTHALPY S.A., F-13384 Marseille Cédex 13 (FR)
(72) Inventeur: PANTALONI, Jacques, F-13009 Marseille (FR); MARTIN, Roger, F-13170 La Gavotte (FR)
(74) Mandataire: Somnier, Jean-Louis
(86) Numéro de dépôt international: FR9300018
(87) Numéro de publication internationale: WO9318335

(56) Documents cités:
- FR-A- 1 465 383
- GB-A- 948 206
- US-A- 1 942 162
- US-A- 2 175 948
- US-A- 3 112 043

## Description

La présente invention a pour objet un capitonnage modulaire isolant pour enceinte fermée sous la forme d'un prêt à monter, son procédé de conditionnement ainsi que son procédé de fabrication ou de montage dans une enceinte fermée.

Le secteur technique de l'invention est le domaine de la fabrication de matériau d'isolation adapté aux parois.

Une des applications principale de l'invention est la réalisation de capitonnage spécialement conçu pour isoler thermiquement les parois des enceintes destinées au transport de marchandises telles que fourgons ou containers maritimes, routiers, ferroviaires ou aériens.

En effet, les dispositifs connus et réalisés à ce jour sont le plus souvent réalisés "in situ", à l'intérieur de l'enceinte du container ou du volume à isoler, par assemblage de divers éléments isolants, raidisseurs ou intercalaires qu'il faut ajuster sur place aux dimensions intérieures de l'enceinte, ce qui demande un temps important et une main-d'oeuvre hautement qualifiée. De surcroît, une fois le capitonnage installé, il est impossible de vérifier si les éléments situés derrière les panneaux intérieurs visibles ont été correctement installés, voir par exemple FR-A-2 601 752.

Or, tous les éléments sont nécessaires à l'efficacité d'isolation du capitonnage, et si l'un est absent ou mal monté, celui-ci n'aura pas les performances voulues, et la marchandise stockée dans l'enceinte concernée pourra être alors avariée.

Par ailleurs, on connaît différents dispositifs adaptés à diverses utilisations autres, qui permettent de résoudre ce problème d'efficacité d'isolation nécessaire à l'utilisation concernée, tout en ne nécessitant pas une mise en oeuvre complexe in situ : il s'agit en effet de systèmes réalisés à partir de panneaux modulaires, amovibles préfabriqués, tels que ceux décrits dans la demande de brevet FR. 2.660.060 du 23 Mars 1990 de la société SARP INDUSTRIE, concernant une "enceinte thermique destinée à fonctionner à température élevée, et constituée de panneaux modulaires amovibles et non jointifs comprenant chacun une plaque métallique extérieure munie d'un système réfractaire sur sa face tournée vers l'intérieur de l'enceinte"; on note également la demande de brevet FR. 2.623.172 déposée le 16 Novembre 1987 par Monsieur K' JAN ALAIN sur des "cuves à vin composées de panneaux composites structurels isolants" livrables en kit permettant en particulier, d'après l'inventeur d'obtenir une économie intéressante sur les coûts de transport et de manutention; dans un autre domaine d'application, on relève également la demande de brevet EP-A-408510 du 11 Juillet 1989 déposée par la société WELK ELEKTRA INGENIERIE CORPORATION LIMITED sur un "procédé et dispositif pour la fabrication de panneaux modulaires creux et panneaux ainsi obtenus", essentiellement pour l'isolation thermique et destinés aux cuves de réfrigérateurs; enfin, on peut noter le brevet WO-A-8204453 du 24 Mars 1982 du Bureau d'Etudes et de Constructions Industrialisées SABECI sur un "système de bâtiment industrialisé métallique à étages, avec éléments parachevés en atelier", comportant des pannotages d'isolation acoustique et thermique et différents autres éléments modulaires permettant tout type de construction de bâtiment.

On remarque ainsi que pour chaque application particulière et chaque type d'isolation, il est nécessaire de développer des dispositifs de capitonnage et/ou de panneaux isolants correspondant à chacune de ces applications.

Dans le domaine propre aux enceintes fermées, comme en particulier celles destinées au transport de marchandises, qui est l'objectif principal de la présente invention, il n'est pas connu ni utilisé à ce jour d'éléments modulaires, car la plupart des enceintes considérées ne sont pas de dimensions absolument standard, et ne sont pas prévues initialement à recevoir de tels capitonnages. En conséquence, les procédés et dispositifs utilisés à ce jour sont réalisés in situ, à l'intérieur de l'enceinte concernée, tel qu'indiqué précédemment, et à partir d'éléments en plaques et de raidisseurs adaptés au transport de marchandises, nécessitant en effet une bonne résistance et isolation par rapport à l'enceinte extérieure, qui est souvent métallique.

On peut noter dans ce domaine le brevet des Etablissements DAHER & Cie déposé le 17 Juillet 1986 sous le No. 2.601.752 et portant sur un "panneau isolant pour revêtement interne de capacité destiné au transport de marchandises"; afin de répondre aux objectifs ci-dessus, à savoir leur mise en place à l'intérieur d'une enceinte et de résistance par rapport aux marchandises et leur adaptation aux contraintes d'utilisation, les panneaux décrits dans ce brevet se caractérisent par la combinaison de supports constitués de raidisseurs espaceurs, délimitant entre eux des vides intercalaires, et recevant des feuilles métalliques tendues sur du papier kraft et plaquées sur une surface plane continue et résistante, elle-même recevant de nouveaux espaceurs raidisseurs plaqués contre une seconde surface rigide en résine synthétique attenante avec des lames d'air interposées, et formant par l'intermédiaire d'une feuille métallique tendue également sur papier kraft, la paroi interne de la capacité protégée par deux nouveaux raidisseurs au contact des marchandises.

Ceci montre bien qu'un tel montage réalisé in situ, nécessitant une superposition d'éléments à adapter aux dimensions de l'enceinte, prend beaucoup de temps et nécessite du personnel qualifié, sans être tout à fait sûr une fois le montage réalisé, de la fiabilité de l'isolation, du fait qu'une fois tout monté, on ne peut pas accéder au premier élément déposé contre la première surface de l'enceinte intérieure à isoler.

Le problème posé est donc de pouvoir isoler différentEs enceintes existantes, et en particulier destinées au transport des marchandises, par un capitonnage modulaire isolant pouvant être installé par un personnel non spécialisé, très rapidement et économiquement, sans risque d'oubli d'un des éléments essentiels de l'isolation et pouvant s'adapter à différents types de d'enceintes dans des gammes de dimensions standards, même approximativement de valeurs identiques.

Une solution au problème posé est un capitonnage modulaire isolant pour enceinte fermée, constitué d'un prêt-à-monter selon la revendication 2, conditionné selon un procédé d'après la revendication 1.

Dans un mode préférentiel de réalisation, lesdites plaques constituant le panneau sont recouvertes sur au moins une de leur face d'un matériau réalisant une surface réfléchissante.

De préférence, lesdites plaques sont symétriques et réversibles à double face réfléchissante.

Dans un autre mode préférentiel de réalisation, les écarteurs placés entre les panneaux recouvrant le plafond, et celui-ci, sont constitués de cales flexibles qui compensent les variations de hauteur et peuvent être glissées en place après l'ensemble desdits panneaux.

Suivant une réalisation préférentielle, lesdits écarteurs concernant les parois périphériques latérales sont des pastilles auto-adhésives double face en matériau souple.

Le résultat est de nouveaux types de capitonnages modulaires isolants pour enceinte fermée, en particulier destinés au transport de marchandises, tel que fourgons, containers maritimes, routiers ferroviaires ou aériens répondant au problème posé, et supprimant les inconvénients cités dans les capitonnages et procédés actuels.

En effet, il permet à un personnel non spécialisé d'installer très rapidement et économiquement un capitonnage isolant dont les éventuelles malfaçons pourront être décelées à posteriori par un simple examen visuel, en utilisant, le procédé de réalisation du capitonnage modulaire isolant suivant la revendication 9.

Ainsi, dans un mode préférentiel de réalisation, le capitonnage est constitué d'un prêt à monter, ou kit adapté aux dimensions du container ou de l'enceinte à équiper comprenant, d'une part, une série de panneaux auto-porteurs isolants modulaires réversibles à double surface réfléchissante, des couvre-joints plats et d'angle, des panneaux de fond également modulaires, l'ensemble étant prédécoupé en usine et, d'autre part, d'accessoires ou d'éléments de montage préfabriqués composés de cales flexibles et de pastilles auto-adhésives double face.

Ainsi, lesdits panneaux isolants monobloc en plaques et auto-porteurs ne nécessitent plus de raidisseurs assurant leur mise en place et leur maintien : seuls des écarteurs les maintenant écartés de la surface interne de l'enceinte à isoler sont suffisants pour assurer la rupture de conduction entre la paroi de cette enceinte et les éléments de panneaux; ainsi lesdits écarteurs sont ponctuels de type en plots ou en petits blocs, de préférence auto-adhésifs, afin d'assurer leur mise en place rapide, sans nécessiter d'outillage particulier.

Par ailleurs, lesdits panneaux isolants sont de préférence revêtus au moins sur une face d'un matériau en film réfléchissant et de préférence, deux, de façon à assurer une symétrie au panneau, de telle façon que quel que soit le sens dans lequel le personnel posera les panneaux, on est sûr de la bonne continuité des écrans réfléchissants et de l'étanchéité apportée par les couvre-joints.

Par ailleurs, disposant de panneaux standards optimum s'adaptant aux parois latérales et supérieures de l'enceinte dans le cas des containers, qui sont à priori de même gamme de dimensions de base et de section en général carrée, mais qui d'un container à l'autre peuvent être différentes et nécessitent à l'heure actuelle un montage adapté in situ, lesdits écarteurs de plafond peuvent être alors des cales qui compensent les variations de dimensions par leur souplesse, ou tout dispositif s'adaptant aux petites variations de hauteur : celles-ci peuvent être en effet de plusieurs centimètres à l'intérieur.

Ainsi, par la combinaison de l'ensemble des éléments ci-dessus et la préfabrication de ceux-ci, par suppression des raidisseurs, par la préfabrication et la modularité, et l'absence de collage des différents composants en plaques, on peut obtenir une méthode très rapide de mise en place ne nécessitant, comme cela a pu être essayé, qu'une demi heure environ pour une personne dans un container de vingt pieds standard, alors que jusqu'à ce jour, il était nécessaire d'utiliser deux personnes pendant quatre heures pour obtenir un résultat qui malgré tout n'était pas forcément fiable, et difficilement contrôlable visuellement une fois terminé.

On pourrait citer d'autres avantages de la présente invention, mais ceux cités ci-dessus en montrent déjà suffisamment pour en démontrer la nouveauté et l'intérêt.

La description et les figures ci-après représentent un exemple de réalisation de l'invention, mais n'ont aucun caractère limitatif ; d'autres réalisations sont possibles dans le cadre de la portée et de l'étendue des présentes revendications.

La figure 1 est une vue en perspective frontale d'une enceinte fermée, en particulier de type container maritime qui est l'exemple retenu dans la description suivante, car le plus adapté à la présente invention, mais d'autres types d'enceintes peuvent être équipés du même type de capitonnage.

La figure 2 est une vue en coupe d'un panneau auto-porteur isolant de parois latérales et de plafond.

La figure 3 est une coupe horizontale partielle d'un container type maritime équipé de panneaux isolants tels que représentés sur la figure 1.

La figure 4 est une coupe verticale partielle d'un container maritime comme sur la figure 3, et équipé également de panneaux auto-porteurs tels que représentés sur la figure 1.

Le capitonnage modulaire isolant suivant l'invention et tel que représenté sur les figures jointes, pour enceinte fermée 7, et plus particulièrement pour des containers de transport, est constitué de panneaux isolants 1 pour les parois latérales périphériques et le plafond, de panneaux isolants 2 de sol, et d'éléments préfabriqués complémentaires, permettant à la fois le montage desdits panneaux et une meilleure isolation, tel qu'en particulier les couvre-joints plats 3 et d'angle 4, et différents types d'écarteurs 5, 6, tels que définis ci-dessous.

En effet, dans la présente invention, lesdits panneaux 1, 2 et les éléments préfabriqués font partie d'un prêt à montet ou "kit" adaptable aux dimensions de l'intérieur de l'enceinte 7 à isoler et comprenant la totalité des éléments nécessaires au capitonnage; lesdits panneaux 1 recouvrant les parois périphériques et le plafond de l'enceinte, sont constitués d'un matériau isolant monobloc autoporteur en plaques, et lesdits éléments préfabriqués comprennent essentiellement des écarteurs 5, 6 sous forme de cales ponctuelles, placées entre la surface interne de l'enceinte 7 et celles externes desdits panneaux 1, et réalisées dans un matériau apte à rompre toute conduction thermique entre les deux dites surfaces.

Lesdites plaques constituant le panneau 1 sont recouvertes sur au moins une de leur face d'un matériau en film ou en peinture réalisant une surface réfléchissante, et de préférence, sont symétriques et réversibles avec une double face réfléchissante.

De façon à rendre la fabrication standard et le montage simplifié, les panneaux isolants 1 surtout dans le cas de containers qui sot de section carrée sont identiques en longueur, et à la largeur près pour les côtés et le plafond de l'enceinte 7. Ils ont une largeur standard, par exemple sensiblement égale à 1,20 m correspondant à une fabrication courante et donc économique. Leur longueur est légèrement inférieure à la hauteur de l'enceinte à équiper.

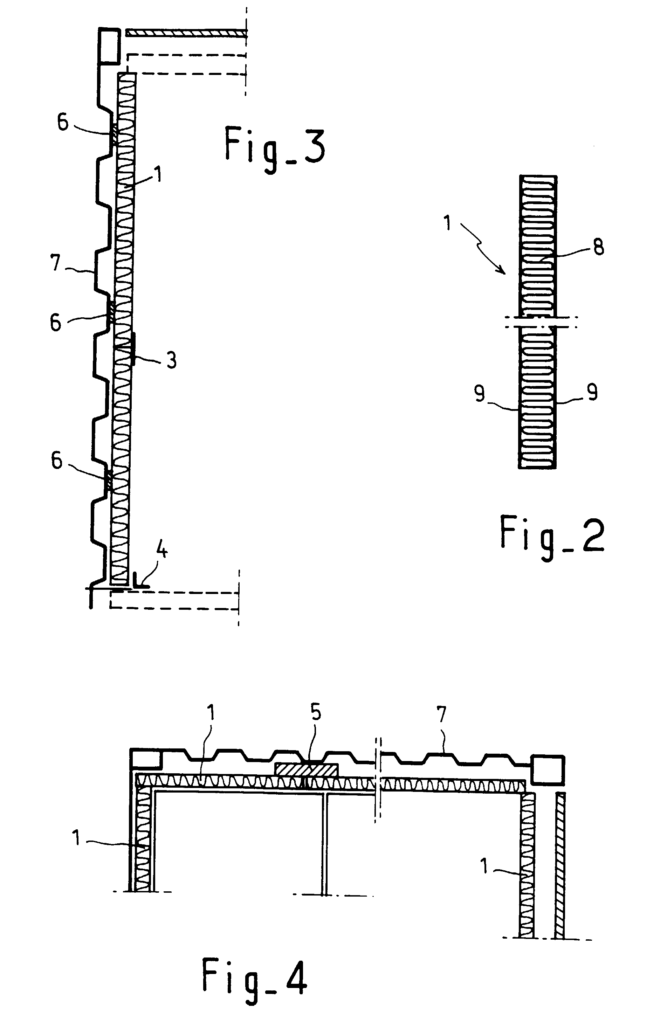

Suivant la figure 2, ils sont formés d'une âme 8 constituée d'une plaque, de dix centimètres d'épaisseur environ en matériau alvéolaire semi-rigide, tel que le polystyrène expansé, moulée en continu ou en discontinu, ou en assemblage type nid de d'abeille de matériau tel que du carton, recouverte sur chacune de ses faces d'un écran réfléchissant 9 lisse et de préférence, brillant, pouvant être un film polyester aluminisé sur papier kraft gris, ou un complexe feuille d'aluminium d'un micron d'épaisseur collée sur papier kraft, ou même une peinture brillante, et en ce cas, lesdits panneaux sont recouverts d'un support de type carton intermédiaire permettant de recevoir ladite peinture.

Les panneaux 1 sont auto-porteurs et, de préférence symétriques, ce qui permet de les placer dans n'importe quel sens sans inconvénient, et sans risque de se tromper. Leur constitution leur permet de s'adapter aisément aux différences de dimensions intérieures de containers, qui sont assez dispersés par rapport aux dimensions moyennes standard.

La structure de panneaux mono-blocs en plaques auto-porteurs leur permet de ne pas nécessiter de raidisseur pour le maintien des feuilles réfléchissantes, du panneau et du matériau isolant tel que pourtant nécessité dans les techniques actuelles. Dans la présente invention, l'impératif essentiel est d'avoir des écarteurs entre lesdits panneaux et l'enceinte à isoler, de façon à constituer une rupture de conduction entre la paroi qui est souvent métallique de l'enceinte extérieure, et la paroi réfléchissante du panneau isolant.

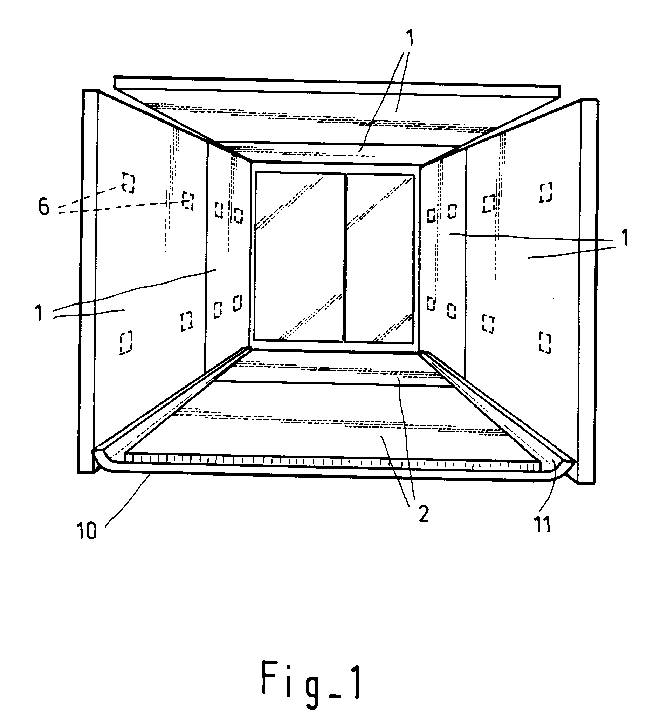

En ce qui concerne les parois latérales périphériques, lesdits écarteurs 6 sont de préférence des pastilles auto-adhésives double face en matériau souple, pouvant être posées dans un premier temps contre l'enceinte elle-même au nombre de trois ou quatre par exemple par panneau, puis reçoivent les panneaux isolants 1, qui viennent se maintenir contre leur face adhésive à la distance voulue de l'enceinte tel que représenté sur les figure 1 et 3.

En ce qui concerne les panneaux 1 couvrant le plafond, afin de pouvoir rattraper les différences de dimensions de hauteurs intérieures desdits volumes fermés, lesdits écarteurs 6 sont glissés après la mise en place des panneaux de plafond, tel que représenté sur la figure 4, et sont placés entre lesdits panneaux 1 et le plafond : ils sont constitués de cales flexibles 5 qui compensent ces dites variations de dimensions. Ainsi, les panneaux de toit ou plafond, dont la longueur est égale à la largeur du container, elle-même égale à la hauteur pour les types les plus répandus, sont posés à cheval sur les extrémités supérieures et stabilisés grâce auxdites cales flexibles 5, qui peuvent être réalisées en mousse plastique contre collée sur du carton ou d'autres matériaux qui permettent de les glisser tout en gardant leur souplesse et leur efficacité de ressort.

L'étanchéité à l'air des parois latérales et du plafond ou toit est assurée ensuite en recouvrant les joints entre les panneaux isolants 1 dont les bords doivent se toucher, de bandes auto-adhésives planes 3 ou préformées 4 pour les angles, et conditionnées en rouleaux pour être découpées à la demande.

En ce qui concerne les panneaux 2 recouvrant le sol de l'enceinte 7, ceux-ci sont posés de préférence sur une feuille 10 en matériau souple et étanche, tel qu'un film de polyane de 12 à 20 centièmes de millimètres par exemple d'épaisseur, posée sur toute la surface du sol, destinée à assurer l'étanchéité à l'air et à l'humidité et sur laquelle sont posées alors de préférence les panneaux 2. Ceux-ci sont constitués par exemple de deux feuilles de polystyrène 11 d'environ 2 millimètres d'épaisseur et possédant un film réfléchissant de type aluminium collé sur une face et d'une plaque de fibre de bois d'environ 3,2 millimètres d'épaisseur : ils peuvent être de la même largeur que les panneaux isolants 1 latéraux et d'une longueur permettant de les insérer entre les panneaux isolants latéraux en ménageant à leur extrémité un passage pour un léger relevé de la feuille de polyanne 10, dont la surface est alors plus grande que celle du sol qu'elle recouvre et éventuellement des feuilles de polystyrène 11.

Ladite feuille 10 en matériau souple qui peut être non seulement en polyanne, mais également en polypropylène de type utilisé pour les bâches, assure ainsi la continuité d'étanchéité à la périphérie par sa déformation contre les parois.

Les panneaux de sol 2 sont constitués de couches minces de préférence, de façon à ce qu'ils puissent rester souples, tout en supportant des charges importantes pour assurer le transport des marchandises à l'intérieur, tout en assurant un minimum d'isolation qui peut être cependant d'efficacité plus réduite que les surfaces latérales, car le plancher est moins exposé aux échanges thermiques.

L'ensemble des éléments ainsi prédimensionnés nécessaires à la confection d'un capitonnage isolant est conditionné en colis de panneaux standards, et éventuellement suivant le cas de colis de panneaux d'ajustage de largeur non standard, de façon à s'adapter à différents types de dimension. Le nombre nécessaire de ces colis, auxquels seront ajoutés les accessoires de montage, forme un prêt à monter ou "kit" complet, qui est livré sur palette perdue. En effet, un tel type de capitonnage, du fait de sa standardisation et de la relative faible valeur des matériaux qui le constituent, peut être jeté à chaque usage et ainsi simplifier énormément l'usage des containers qui peuvent ainsi changer de destination en étant, suivant la demande, soit isolants, soit simplement porteur sans isolation par démontage rapide du capitonnage : celui-ci peut être jeté alors sur le lieu de ladite transformation ou changé après usage par usure normale.

Ceci est d'autant plus facile à réaliser et possible, que le montage s'effectue en un temps très court et ne demande pas de personnel spécialisé, ce qui permet de diminuer le prix de revient dans des proportions très importantes.

Le positionnement des divers éléments constitutifs donne au dispositif suivant l'invention un maximum d'effets utiles qui n'avaient pas été obtenus à ce jour par des dispositifs similaires.

## Revendications

1. Procédé de conditionnement d'un capitonnage modulaire isolant destiné à une enceinte fermée (7) et constitué de panneaux (1, 2) devant couvrir les parois périphériques, le plafond et le sol de ladite enceinte, et d'éléments préfabriqués comprenant des écarteurs (5, 6) et devant être placés entre la surface interne de l'enceinte (7) et celle externe desdits panneaux (1) et réalisés dans un matériau apte à rompre toute conduction thermique entre les deux dites surfaces, caractérisé en ce que :
- on prédécoupe en usine, dans un matériau isolant monobloc, des panneaux (1) suivant des dimensions identiques et standard, dont la longueur de certains est déterminée inférieure à la hauteur de l'enceinte (7) pour constituer les panneaux latéraux (1) et d'autres de longueur correspondant à la largeur de l'enceinte , pour constituer les panneaux de plafond, et qui sont autoporteurs quelle que soit leur position,
- on préfabrique en usine lesdits éléments écarteurs (6) pour panneaux latéraux (1) en forme de petits blocs et en nombre égal au moins à trois fois le nombre desdits panneaux (1), ainsi que les écarteurs (5) de panneaux de plafond constitués de cales flexibles permettant de compenser des variations de dimensions;
- on prédécoupe en usine d'autres panneaux (2) isolant suivant des dimensions identiques et standard, dont la longueur est inférieure à la largeur de l'enceinte (7) diminuée de l'épaisseur de deux panneaux latéraux (1) autoporteurs, pour constituer les panneaux de sol;
- on conditionne un nombre suffisant desdits panneaux (1, 2) et écarteurs (5, 6), avec des couvre-joints plats (3) et d'angle (4) en colis formant un prêt-à-monter ou kit et on le livre sur tout site où l'ensemble de ces éléments peut être monté directement dans l'enceinte (7) sans personnel spécialisé, ni outillage.

2. Prêt-à-monter d'un capitonnage modulaire isolant, conditionné suivant le procédé de la revendication 1, caractérisé en ce qu'il comporte la totalité des éléments nécessaires audit capitonnage, dont lesdits panneaux isolants (1, 2), les couvre-joints plats (3) et d'angle (4) et lesdits écarteurs (5, 6), lesdits panneaux (1, 2) étant tous de même largeur.

3. Prêt-à-monter d'un capitonnage suivant la revendication 2, caractérisé en ce que les plaques constituant les panneaux (1,2) sont recouvertes sur au moins une de leurs faces, de matériau réalisant une surface réfléchissante.

4. Prêt-à-monter d'un capitonnage suivant la revendication 3, caractérisé en ce que lesdites plaques sont symétriques et réversibles à double face réfléchissante.

5. Prêt-à-monter d'un capitonnage suivant l'une quelconque des revendications 2 à 4, caractérisé en ce qu'il comporte des écarteurs (5) constitués de cales flexibles, permettant de compenser des variations de dimensions.

6. Prêt-à-monter d'un capitonnage suivant l'une quelconque des revendications 2 à 5, caractérisé en ce qu'il comporte une feuille (10) en matériau souple et étanche.

7. Prêt-à-monter d'un capitonnage suivant l'une quelconque des revendications 2 à 5, caractérisé en ce que lesdits écarteurs (6) sont des pastilles auto-adhésives double face en matériau souple.

8. Prêt-à-monter d'un capitonnage suivant l'une quelconque des revendications 2 à 7, caractérisé en ce que lesdits panneaux isolants (1) sont formés d'une âme (8) constituée d'une plaque de plusieurs centimètres d'épaisseur d'un matériau alvéolaire semi-rigide de type polystyrène expansé ou nid d'abeille en carton.

9. Procédé de fabrication d'un capitonnage isolant modulaire d'une enceinte fermée (7), à partir d'un prêt-à-monter suivant l'une quelconque des revendications 2 à 8, caractérisé en ce que :
- on fixe sur les parois latérales de l'enceinte (7) à équiper les écarteurs (6) en nombre au moins égal à trois pour chaque panneau (1),
- on applique contre ces dits écarteurs (6) lesdits panneaux isolants (1) latéraux recouvrant les parois périphériques latérales,
- on glisse ensuite au-dessus de ces dits panneaux latéraux les panneaux de plafond dont la longueur est égale à la largeur de l'enceinte, de façon à ce qu'ils soient posés à cheval sur les extrémités supérieures desdits panneaux latéraux,
- on stabilise ensuite ces dits panneaux de plafond (1) par des écarteurs (6) flexibles interposés entre ces dits panneaux et le plafond de l'enceinte,
- on pose ensuite une feuille souple d'étanchéité (10) et les panneaux isolants de sol (2) sans aucune fixation, puis on complète ledit capitonnage par des couvre-joints plats (3) et d'angle (4) composant le prêt-à-monter d'isolation et permettant de compléter ladite isolation.

10. Capitonnage isolant modulaire, caractérisé en ce qu'il est réalisé à partir d'un prêt-à-monter suivant l'une quelconque des revendications 2 à 8, et suivant le procédé de la revendication 9.

## Patentansprüche

1. Verfahren zum Verpacken einer aus Modulen zusammengesetzten, isolierenden Polsterung, die für einen geschlossenen Behälter (7) bestimmt ist und aus Platten (1, 2), welche die Umfangswände, die Decke und den Boden des Behälters bedecken sollen, und vorgefertigten Elementen zusammengesetzt ist, die Abstandshalter (5, 6) umfassen und zwischen der Innenfläche des Behälters (7) und der Außenfläche der Platten (1) angeordnet werden sollen und aus einem Material bestehen, das geeignet ist, jegliche thermische Leitung zwischen diesen beiden Flächen zu unterbrechen, dadurch gekennzeichnet, daß:
- im Werk Platten (1) aus einem einteiligen Isoliermaterial nach identischen und Standardabmessungen vorgeschnitten werden, wobei die Länge bestimmter dieser Platten so bestimmt ist, daß sie geringer ist als die Höhe des Behälters (7), um die Seitenplatten (1) zu bilden, und die Länge anderer Platten der Breite des Behälters entspricht, um die Deckenplatten zu bilden, und die unabhängig von ihrer Position selbsttragend sind,
- im Werk die Abstandshalter (6) für Seitenplatten (1) in Form kleiner Blöcke und in einer Anzahl vorgefertigt werden, die mindestens gleich der dreifachen Anzahl der Platten (1) ist, sowie die Abstandshalter (5) für Deckenplatten, die aus biegsamen Keilen bestehen, die einen Ausgleich der Maßunterschiede gestatten,
- im Werk andere Platten (2) nach identischen und Standardabmessungen vorgefertigt werden, deren Länge unter der Breite des Behälters (7), vermindert um die Stärke zweier selbsttragender Seitenplatten (1), liegt, um die Bodenplatten zu bilden;
- eine ausreichende Anzahl von Platten (1, 2) und Abstandshaltern (5, 6) mit flachen Fugendeckleisten (3) und Winkelleisten (4) in ein Paket verpackt wird, das einen Bausatz oder Baukasten bildet und dann an einen beliebigen Montageort ausgeliefert wird, an dem diese ganzen Bauteile ohne Fachpersonal oder Werkzeug direkt in den Behälter (7) eingebaut werden können.

2. Bausatz für eine aus Modulen zusammengesetzte, isolierende Polsterung, die nach dem Verfahren des Anspruchs 1 verpackt wurde, dadurch gekennzeichnet, daß er alle für diese Polsterung notwendigen Elemente umfaßt, darunter die isolierenden Platten (1, 2), die flachen Fugendeckleisten (3) und Winkelleisten (4) und die Abstandshalter (5, 6), wobei die Platten (1, 2) alle die gleiche Breite aufweisen.

3. Bausatz für eine Polsterung nach Anspruch 2, dadurch gekennzeichnet, daß die Platten, welche die Platten (1, 2) bilden, auf mindestens einer ihrer Seiten mit einem Material beschichtet sind, das eine reflektierende Oberfläche bildet.

4. Bausatz für eine Polsterung nach Anspruch 3, dadurch gekennzeichnet, daß die Platten symmetrisch und umkehrbar mit zwei reflektierenden Seiten sind.

5. Bausatz für eine Polsterung nach einem der Ansprüche 2 bis 4, dadurch gekennzeichnet, daß er Abstandshalter (5) aufweist, die aus biegsamen Keilen bestehen, die einen Ausgleich von Maßunterschieden ermöglichen.

6. Bausatz für eine Polsterung nach einem der Ansprüche 2 bis 5, dadurch gekennzeichnet, daß er eine dünne Platte (10) aus elastischem und dichtem Material umfaßt.

7. Bausatz für eine Polsterung nach einem der Ansprüche 2 bis 5, dadurch gekennzeichnet, daß die Abstandshalter (6) beidseitig selbstklebende Plättchen aus elastischem Material sind.

8. Bausatz für eine Polsterung nach einem der Ansprüche 2 bis 7, dadurch gekennzeichnet, daß die isolierenden Platten (1) von einem Steg (8) gebildet werden, der aus einer mehrere Zentimeter dicken Platte aus einem halbstarren, zelligen Material nach Art von aufgeschäumtem Polystyrol oder wabenförmigen Karton besteht.

9. Herstellungsverfahren für eine aus Modulen zusammengesetzte, isolierende Polsterung eines geschlossenen Behälters (7) aus einem Bausatz nach einem der Ansprüche 2 bis 8, dadurch gekennzeichnet, daß:
- an den Seitenwänden des auszurüstenden Behälters (7) die Abstandshalter (6) angebracht werden, und zwar in einer Anzahl, die mindestens gleich drei pro jeweiliger Platte (1) ist,
- gegen die Abstandshalter (6) die isolierenden Seitenplatten (1) gedrückt werden, welche die seitlichen Umfangsflächen bedecken,
- anschließend über diese Seitenplatten die Deckenplatten geschoben werden, deren Länge gleich der Breite des Behälters ist, in der Weise, daß sie quer auf den oberen Enden der Seitenplatten liegen,
- anschließend diese Deckenplatten (1) durch biegsame Abstandshalter (6) stabilisiert werden, die zwischen diese Platten und die Decke des Behälters gesetzt werden,
- dann eine biegsame Abdichtplatte (10) und die isolierenden Bodenplatten (2) ohne jede Befestigung eingelegt werden und die Polsterung durch flache Fugendeckleisten (3) und Winkelleisten (4) vervollständigt wird, die den Isolierungsbausatz bilden und die Vervollständigung der Isolation ermöglichen.

10. Aus Modulen zusammengesetzte, isolierende Polsterung, dadurch gekennzeichnet, daß sie aus einem Bausatz nach einem der Ansprüche 2 bis 8 und nach dem Verfahren des Anspruchs 9 hergestellt wird.

## Claims

1. Method for packing a modular insulating upholstery for a closed chamber (7), constituted of panels (1,2) designed to cover the peripheral walls, the ceiling and the floor of said chamber, and of prefabricated elements comprising spacers (5, 6) placed between the internal surface of the chamber (7) and the external surfaces of said panels (1), and produced in a material capable of breaking any thermal conduction between said two surfaces, characterised in that:
- panels (1) made from a monobloc insulating material are pre-cut in a factory according to identical and standard dimensions, with the lengths of some panels being determined to be less than the height of the chamber (7) so as to constitute the lateral panels (1) and the lengths of other panels corresponding to the width of the chamber so as to constitute the ceiling panels and said panels being self-supporting whatever their position ;
- said spacer elements (6) are prefabricated in a factory for lateral panels (1) in the form of small blocks and in a number at least equal to three times the number of said panels (1), as well as the spacers (5) for ceiling panels constituted of flexible blocks which compensate for the variations in dimensions;
- other insulating panels (2) are pre-cut in a factory according to identical and standard dimensions, with the lengths of said panels being less than the height of the chamber (7) decreased in thickness of two self-supporting lateral panels (1), so as to constitute the floor panels;
- a sufficient number of said panels (1, 2) and said spacers (5, 6) are packed with flat joint covers (3) and corner joint covers (4) in packages forming an assembly set or kit and it is delivered onto any site where all of these elements may be assembled directly inside the chamber (7) without requiring a qualified staff or any tooling.

2. Assembly set of a modular insulating upholstery, packed according to the method of claim 1, characterised in that it comprises all the elements necessary for said upholstering, among which said insulating panels (1, 2), said flat joint covers (3) and corner joint covers (4) and said spacers (5, 6), all of said panels (1, 2) being of the same length.

3. Assembly set of an upholstery according to claim 2, characterised in that the plates constituting the panels (1, 2) are covered over at least one of their faces with a material producing a reflecting surface.

4. Assembly set of an upholstery according to claim 3, characterised in that said plates are symmetrical and reversible with double reflecting faces.

5. Assembly set of an upholstery according to any one of claims 2 to 4, characterised in that it comprises spacers (5) constituted of flexible blocks which compensate for the variations in dimensions.

6. Assembly set of an upholstery according to any one of claims 2 to 5, characterised in that it comprises a sheet (10) of supple and tight material.

7. Assembly set of an upholstery according to any one of claims 2 to 5, characterised in that said spacers (6) are twin-face self-adhesive patches in supple material.

8. Assembly set of an upholstery according to any one of claims 2 to 7, characterised in that said insulating panels (1) are formed of a core (8) constituted of a plate of several centimetres thickness in a semi-rigid alveolated material, of expanded polystyrene or honeycomb cardboard type.

9. Method for producing a modular insulating upholstery for a closed chamber (7), from an assembly set according to any one of claims 2 to 8, characterised in that:
- the spacers (6) are fixed on the lateral walls of the chamber (7) to be equipped, in a number at least equal to 3 for each panel (1);
- said insulating lateral panels (1) covering the lateral peripheral walls are applied against said spacers (6);
- then the ceiling panels of which the length is equal to the width of the chamber, are slid above said lateral panels so that said ceiling panels can be placed astride on the upper ends of said lateral panels;
- then said ceiling panels (1) are stabilized by flexible spacers (6) interposed between said panels and the ceiling of the chamber;
- then a supple insulating sheet (10) and the insulating floor panels (2) are laid without any fixing means and said upholstery is completed by flat joint covers (3) and corner joint covers (4) composing the insulating assembly set and enabling said insulation to be completed.

10. Modular insulating upholstery, characterised in that it is made from an assembly set according to any one of claims 2 to 8, and according to the method of claim 9.
